# FASCICULE DE BREVET EUROPEEN

(11) **EP 3 541 767 B1**
(45) Date de publication et mention de la délivrance du brevet: **09.09.2020**
(21) Numéro de dépôt: 17801431.2
(22) Date de dépôt: 14.11.2017
(51) Int. Cl.: C04B 28/26, C04B 28/00

(54) **MOUSSE GEOPOLYMERE AUX PROPRIETES AMELIOREES**
GEOPOLYMERSCHAUMSTOFF MIT VERBESSERTEN EIGENSCHAFTEN
GEOPOLYMER FOAM WITH IMPROVED PROPERTIES

(30) Priorité: 17.11.2016 FR 1661126
(43) Date de publication de la demande: 25.09.2019
(73) Titulaire: Isolfeu-Creation, 57000 Metz (FR)
(72) Inventeur: TOUSSAINT, Philippe, 56530 Queven (FR)
(74) Mandataire: Tripoz, Inès
(86) Numéro de dépôt international: PCT/EP2017/079238
(87) Numéro de publication internationale: WO 2018/091482

(56) Documents cités:
- WO-A1-2015/062860
- WO-A1-2016/156761
- WO-A1-2016/173950

## Description

L'invention appartient au domaine des géopolymères et plus particulièrement à celui des mousses minérales.

L'invention concerne une mousse minérale incombustible, hydrophobe et isolante thermiquement. L'invention concerne également le procédé de fabrication de ladite mousse, ainsi que la composition intermédiaire destinée à former la mousse avant sa mise en contact avec un agent d'expansion. L'invention concerne enfin des portes, conduites colmatées et autres supports sur lesquels est appliquée, ou qui comprennent, ladite mousse.

Les mousses géopolymères sont connues de l'art antérieur. Les mousses géopolymères possèdent de nombreux avantages, le principal étant qu'en lieu et place de la chaine carbonée des polymères classiques, on utilise de la matière minérale composée de silice et d'alumine. Il s'agit donc de polymères inorganiques composés de matière minérale telle que la silice et l'alumine.

Dans le cadre de la présente invention, on entend par géopolymère, un polymère inorganique essentiellement composé de motifs, silico-oxyde (-Si-O-Si-O-), silico-aluminate (-Si-O-Al-O-), ferro-silico-aluminate (-Fe-O-Si-O-Al-O-) ou encore alumino-phosphate (-Al-O-P-O-), créés par un processus dit de géopolymérisation.

Les géopolymères, de par leur nature, trouvent des applications dans le domaine de la construction, en particulier pour la fabrication de ciments et de bétons ou bien encore la protection anti-feu. Ces mousses minérales sont particulièrement intéressantes de par leur faible masse volumique et leurs propriétés isolantes et anti-feu qui font qu'elles peuvent être utilisées dans la construction de murs, de portes, de panneaux isolants et peuvent également servir à colmater ou réparer des conduites, fours et autres systèmes soumis à des températures élevées. Ces dernières utilisations impliquent que la mousse se forme et durcisse rapidement (en quelques minutes) afin de pouvoir être appliquée directement sur la zone à colmater.

Les mousses minérales incombustibles de l'invention peuvent en particulier être préparées à partir d'un liant inorganique tel que le métakaolin, un matériau pouzzolanique naturel. On entend par métakaolin, une argile kaolinitique thermiquement déshydroxylée. En d'autres termes, il s'agit d'un silicate d'alumine déshydroxylé de composition générale Al₂O₃, 2SiO₂.

Des mousses minérales sont connues de l'art antérieur. Il est connu que l'on peut préparer un géopolymère sous forme de mousse minérale en mélangeant un liant inorganique avec une solution dite d'activation, comprenant le plus souvent des hydroxydes de métaux alcalins, puis d'y ajouter un agent d'expansion qui va former un gaz in situ. La génération de gaz va permettre de disperser dans la phase liquide des bulles de gaz et former une mousse, tandis que la réaction du liant inorganique avec la solution d'activation entraine un durcissement, résultat de la polymérisation. Le produit obtenu est une mousse rigide et poreuse.

FR 3 027 023 divulgue des mousses préparées à partir de métakaolin, d'un ou plusieurs agents moussant naturels ou synthétiques d'origine animale ou végétale. En particulier, cette demande vise les agents moussants de type protéinique (exemple 1).

WO 2015/062860 divulgue des mousses à base de métakaolin et comprenant en outre un tensio-actif. Les auteurs recommandent l'utilisation des tensio-actifs non-ioniques, tels que les alkylpolyglucosides qui sont idéaux pour la stabilisation de la mousse. De plus, un apport de gaz est préféré à une génération de gaz in situ.

DE 10 2004 006 563 divulgue des mousses hybrides organiques/inorganiques comprenant des tensio-actifs. En particulier, les tensio-actifs sont des amine-oxydes et des alkyle sulfates.

US 2015/0060720 ou WO 2015/062819 divulguent des procédés de préparation d'une mousse inorganique à durcissement rapide (moins de 10 minutes). L'agent d'expansion possède la particularité d'être de la poudre de rebuts d'aluminium, qui est un mélange de poudre d'aluminium, de nitrure d'aluminium et d'oxyde d'aluminium.

L'expansion (parfois appelée gonflement) et le durcissement rapide de la mousse induisent un certain nombre de contraintes.

Dans les faits, l'expansion est un phénomène qui intervient rapidement (après 1 minute). Ensuite, le sommet du liquide prend forme. L'expansion s'arrête et le bouchon de mousse se raffermit. La demanderesse a constaté que l'utilisation d'un seul tensio-actif ionique ou non-ionique tel que préconisé dans l'état de la technique avait pour effet l'obtention d'une mousse susceptible de présenter des défauts de cohésion. En particulier, l'utilisation de tensio-actifs tel que démontré dans les contre-exemples conduisent à un effondrement prématuré de la mousse ou à des problèmes de retenue en mélange.

On entend par effondrement, un affaissement brutal ou progressif, total ou partiel, de la mousse expansée sur elle-même.

Les défauts observés sont :
- un effondrement de la mousse sur elle-même quelques minutes après le début de l'expansion ;
- au début de l'expansion, le gaz produit n'est pas retenu, il y a perte de gaz sans gain de volume de mousse. Ainsi, on observe, soit un effondrement de la mousse avant expansion complète et durcissement, soit une perte de gaz qui induit une expansion partielle avec durcissement.

Ceci conduit à des mousses dont la qualité est insuffisante pour les utilisations préconisées. En particulier, il est important que la mousse gonfle rapidement et ne présente malgré tout pas de défauts tels que des effondrements, rétractation partielle des bordures, microfissures.

La demanderesse a mis en évidence, de manière surprenante, que l'utilisation d'une combinaison spécifique, selon l'invention, d'au moins un tensio-actif anionique et d'au moins un tensio-actif non-ionique permet d'obtenir une expansion homogène sans retrait sur les bords et sans défaut de cloque (ou blister). De plus, l'utilisation combinée de ces tensio-actifs avec un épaississant, contribue de manière surprenante, à améliorer l'état de surface en éliminant les microfissures. Le produit de l'invention est ainsi en mesure de répondre aux attentes de l'utilisateur, tant en rapidité d'expansion/durcissement que de qualité et d'homogénéité de la mousse. Le produit de l'invention peut être utilisé dans la construction mais aussi dans des conditions de colmatage d'urgence de surfaces.

En particulier, les mousses minérales incombustibles selon l'invention peuvent être utilisées comme barrières coupe-feu et sont conformes A1 selon les normes « réaction au feu » et « résistance au feu », NF EN ISO 1182 et 1716 respectivement. Elles ont une résistance thermique jusqu'à au moins 1200°C. De plus, les mousses peuvent être hydrophobes et constituer une barrière supplémentaire à ses propriétés anti-feu. Le produit de l'invention peut être moulé, coulé et même injecté à distance pour faire des colmatages et calfeutrements sur tout type de surface en conditions normales ou extrêmes.

Les mousses de l'invention présentent :
- des propriétés mécaniques améliorées,
- une durabilité dans le temps, des propriétés qui évoluent avec le séchage,
- une cohésion,
- une rapidité d'expansion et de durcissement compatible avec des utilisations dans des conditions rigoureuses.

L'invention consiste ainsi en une mousse minérale incombustible comprenant :
- de 30 à 90 % en masse de liant inorganique pouzzolanique comprenant du métakaolin polymérisé,
- de 0,08 à 2 % en masse d'épaississant,
- de 0,003 à 0,07 % en masse d'au moins un tensio-actif anionique choisi dans le groupe constitué par les C₈-C₁₈-alkyle sulfates, les C₈-C₁₈-alkyle éther sulfates, les acides C₈-C₁₈-alkyle aryle sulfonique, les acides gras en C₈-C₁₈ et leurs mélanges,
- de 0,002 à 0,03 % en masse d'au moins un tensioactif non-ionique choisi dans le groupe constitué par les alkylpolyglucosides,
- une phase gazeuse.

On entend par « métakaolin polymérisé », un gel géopolymère formé par la réaction du métakaolin avec une solution d'activation (par exemple une solution basique).

Dans un mode de réalisation, la mousse est caractérisée en ce qu'elle comprend de 45 à 90 % en masse de liant inorganique pouzzolanique.

On entend par « épaississant », une substance destinée à moduler/augmenter la viscosité d'une composition.

Dans un mode de réalisation, la mousse est caractérisée en ce que l'épaississant est choisi dans le groupe constitué par les amidons solubles dans l'eau tel que l'amidon prégel, les galactomannannes tels que la gomme guar, la gomme de xanthane, les argiles telles que la bentonite ou la montmorillonite et les dérivés de cellulose tel que la méthyle éthyle cellulose.

Dans un mode de réalisation, la mousse selon l'invention comprend de 0,1 à 2 % en masse d'épaississant.

Dans un mode de réalisation, la mousse selon l'invention comprend de 0,1 à 1 % en masse d'épaississant.

Dans un mode de réalisation, la mousse selon l'invention comprend de 0,2 à 1 % en masse d'épaississant.

Dans un mode de réalisation, la mousse selon l'invention comprend de 0,2 à 0,5% en masse d'épaississant.

On entend par « tensio-actif anionique », un tensio-actif qui libère une charge négative en solution aqueuse. La classe des tensio-actifs anioniques est abondamment décrite dans la littérature.

Dans un mode de réalisation, la mousse selon l'invention est caractérisée en ce que le au moins un tensioactif anionique est choisi dans le groupe constitué par les C₈-C₁₈-alkyle sulfates, les C₈-C₁₈-alkyle éther sulfates, les acides C₈-C₁₈-alkyle aryle sulfonique, les acides gras en C₈-C₁₈ et leurs mélanges.

Dans la présente demande, les abréviations de type « Cₓ-C_{y} » indiquent des intervalles allant de x à y atomes de carbone. Par exemple, « C₈-C₁₈-alkyle sulfates » représente le groupe des sulfates d'alkyle comprenant entre 8 et 18 atomes de carbone, « C₈-C₁₈-alkyle éther sulfates » représente le groupe des éther sulfates d'alkyle dont la chaine alkyle comprend entre 8 et 18 atomes de carbone et « acides C₈-C₁₈-alkyle aryle sulfonique » représente le groupe des acides alkyle aryle sulfonique dont la chaine alkyle comprend entre 8 et 18 atomes de carbone. Dans un mode de réalisation, les chaines carbonées contiennent un nombre pair d'atomes de carbone.

Dans un mode de réalisation, la mousse selon l'invention est caractérisée en ce que le au moins un tensio-actif anionique est un mélange de C₈-C₁₈-alkyle aryle sulfonate, de C₈-C₁₈-alkyle éther sulfate et d'acide gras en C₈-C₁₈.

Dans un mode de réalisation, la mousse selon l'invention est caractérisée en ce que le tensio-actif anionique comprend du sodium dodecylbenzene sulfonate, du sodium pareth sulfate et du potassium cocoate.

Dans le cadre de l'invention, on peut utiliser des tensioactifs dont le numéro CAS est 68411-31-4, 68131-39-5 ou 61789-30-8. On peut par exemple utiliser du EMPICOL XHL 300, commercialisé par la société HUNTSMAN PERFORMANCE PRODUCTS (mélange de sodium dodecylbenzene sulfonate, sodium pareth sulfate, potassium cocoate, cocamide DEA, C12-15 Pareth-7).

Dans un mode de réalisation, la mousse selon l'invention est caractérisée en ce qu'elle comprend de 0,005 à 0,05 % en masse d'au moins un tensio-actif anionique. De préférence, la mousse comprend de 0,005 à 0,025 % en masse d'au moins un tensio-actif anionique.

On entend par « tensio-actif non-ionique », un tensio-actif dont les molécules ne comportent aucune charge nette. La classe des tensio-actifs non-ioniques est abondamment décrite dans la littérature.

Dans le cadre de l'invention, les tensio-actifs non-ioniques sont choisis parmi les alkylpolyglucosides (D-glucopyranose, oligomères, alkyl glucosides). Dans un mode de réalisation préféré, le tensio-actif non-ionique est un mélange spécifique de plusieurs types d'alkylpolyglucosides.

On entend par alkylpolyglucoside, un tensio-actif non-ionique ayant la formule : H-(C₆H₁₀O₅)ₘ-O-R¹, dans laquelle (C₆H₁₀O₅) est une unité glucose et R¹ est un groupe alkyle en C₆-C₂₂, de préférence C₈-C₁₆ et C₈-C₁₀, et m est un entier positif compris entre 1 et 10, 1 ≤ m ≤ 10.

Dans un mode de réalisation, la mousse selon l'invention est caractérisée en ce que le tensio-actif non-ionique est un mélange, ayant un ratio compris entre 60:40 et 90:10, d'alkylpolyglucosides dans lesquels R¹ est un groupe alkyle en C₈-C₁₀ et d'alkylpolyglucosides dans lesquels R¹ est un groupe alkyle en C₈-C₁₆. De préférence le ratio d'alkylpolyglucosides est égal à 80:20.

Dans un mode de réalisation, les alkylpolyglucosides sont ceux commercialisés par la société SEPPIC, tel que le SIMULSOL SL8 (D-glucopyranose, oligomers, decyl octyl glycosides, 01-2119488530-36, CE : 500-200-1) ou le SIMULSOL SL 826 (D-glucopyranose, oligomers, decyl octyl glycosides, 01-2119488530-36, CE : 500-200-1, D-Glucopyranose, oligomeric, C10-16 (even numbered)-alkyl glycosides, 01-2119489418-23, CE: 600-975-8, (2-méthoxyméthylethoxy) propanol, 01-2119450011-60, CE: 252-104-2, dodécane-1-ol, 01-2119485976-15, CE: 203-982-0).

Dans un mode de réalisation, la mousse selon l'invention est caractérisée en ce qu'elle comprend en outre d'autres tensio-actifs tels que les C₈-C₁₈-alcools éthoxylés et les C₈-C₁₈ dialcoolamides.

Dans un mode de réalisation, la mousse selon l'invention est caractérisée en ce qu'elle comprend de 0,002 à 0,02 % en masse d'au moins un tensio-actif non-ionique choisi dans le groupe constitué par les alkylpolyglucosides. De préférence, la mousse comprend de 0,004 à 0,01 % en masse d'au moins un tensio-actif non-ionique choisi dans le groupe constitué par les alkylpolyglucosides.

Dans un mode de réalisation, la mousse selon l'invention est caractérisée en ce que qu'elle comprend en outre de 0,5 à 4 % d'un plastifiant, ledit plastifiant étant de préférence un polycarboxylate. De préférence, la mousse comprend de 0,5 à 2 % de plastifiant.

Dans un mode de réalisation, la mousse selon l'invention est caractérisée en ce qu'elle comprend en outre de 1,5 à 8 % en masse d'un agent hydrophobe, de préférence choisi parmi les siliconates les silanes les siloxanes et leurs mélanges. De préférence, la mousse comprend de 3,5 à 7 % d'un agent hydrophobe.

Dans un mode de réalisation, la mousse selon l'invention est caractérisée en ce qu'elle comprend en outre de 0,3 à 8,3 % en masse d'une protéine animale ou végétale, de préférence de l'ovalbumine ou un isolat de protéine de soja. De préférence, la mousse comprend de 2 à 5 % de protéine.

Dans un mode de réalisation, la mousse selon l'invention est caractérisée en ce qu'elle comprend en outre de 0,01 à 7 % en masse d'agent stabilisant, de préférence du triethylcitrate. De préférence, la mousse comprend de 0,16 à 3 % d'agent stabilisant.

Dans un mode de réalisation, la mousse selon l'invention est caractérisée en ce qu'elle comprend en outre de 1,6 à 13 % d'un liant hydraulique ou mélange de liant hydraulique, de préférence choisi parmi les donneurs de CaO, tels que du ciment de Portland, du plâtre de Paris de l'hydroxyde de calcium ou de la chaux éteinte. Les donneurs de CaO ont la particularité d'accélérer le durcissement de la mousse. De préférence, la mousse comprend de 4 à 9 % de liant hydraulique.

Dans un mode de réalisation, la mousse selon l'invention est caractérisée en ce qu'elle comprend en outre des fibres ou charges, en particulier choisis parmi des microfibres textiles, microfibres de cellulose et des glumelles de grains de céréales.

Dans un mode de réalisation, la mousse selon l'invention est caractérisée en ce qu'elle a une conductivité thermique comprise entre 0,04 et 0,08 W.m⁻².K.

Dans un mode de réalisation, la mousse selon l'invention est caractérisée en ce qu'elle a une résistance thermique supérieure à 900°C, de préférence supérieure à 1000°C et de manière encore plus préférée jusqu'à au moins 1200°C.

Dans un mode de réalisation, la mousse selon l'invention est caractérisée en ce qu'elle a une masse volumique comprise entre 140 et 180 kg/m³.

Dans un mode de réalisation, la mousse selon l'invention est caractérisée en ce qu'elle a un caractère hydrophobe. Une mousse ne comprenant pas d'agent hydrophobe absorbera l'eau, tandis qu'une mousse hydrophobe verra les gouttelettes d'eau rester sur la surface.

L'invention concerne également tout support tel que par exemple une porte coupe-feu, un panneau isolant, un four, une conduite, qui comprend ou sur lequel est apposée une mousse inorganique incombustible telle que définie ci-dessus.

L'invention consiste également en une composition pour la préparation d'une mousse minérale incombustible.

Dans un mode de réalisation, la composition destinée à la préparation d'une mousse minérale incombustible selon l'invention comprend :
- de 20 à 60 % en masse d'au moins un liant inorganique pouzzolanique comprenant du métakaolin,
- de 0,05 à 1,3 % en masse d'épaississant,
- de 0,002 à 0,04 % d'au moins un tensio-actif anionique choisi dans le groupe constitué par les C₈-C₁₈-alkyle sulfates, les C₈-C₁₈-alkyle éther sulfates, les acides C₈-C₁₈-alkyle aryle sulfonique, les acides gras en C₈-C₁₈ et leurs mélanges,
- de 0,001 à 0,02 % d'au moins un tensioactif non-ionique choisi dans le groupe constitué par les alkylpolyglucosides,
- au moins un activateur alkalin choisi dans le groupe hydroxydes de métaux alkalins et des silicates de métaux alcalins et leurs mélanges,
- de l'eau qsp.
« qsp » = quantité suffisante pour.

Dans un mode de réalisation, le pH de la composition est compris entre 12 et 14.

Dans un mode de réalisation, la composition est caractérisée en ce que l'épaississant est choisi dans le groupe constitué par les amidons solubles dans l'eau tel que l'amidon prégel, les galactomannannes tels que la gomme guar, la gomme de xanthane, les argiles telles que la bentonite ou la montmorillonite et les dérivés de cellulose tel que la méthyle éthyle cellulose.

Dans un mode de réalisation, la composition selon l'invention est caractérisée en ce qu'elle comprend de 0,06 à 1,3 % en masse d'épaississant.

Dans un mode de réalisation, la composition selon l'invention est caractérisée en ce qu'elle comprend de 0,06 à 0,6 % en masse d'épaississant.

Dans un mode de réalisation, la composition selon l'invention est caractérisée en ce qu'elle comprend de 0,1 à 0,6 % en masse d'épaississant.

Dans un mode de réalisation, la composition selon l'invention est caractérisée en ce qu'elle comprend de 0,1 à 0,3 % en masse d'épaississant.

Dans un mode de réalisation, la composition selon l'invention est caractérisée en ce que le au moins un tensio-actif non-ionique est un alkylpolyglucoside ou un mélange d'alkylpolyglucosides de formule H-(C₆H₁₀O₅)ₘ-O-R¹, dans laquelle (C₆H₁₀O₅) est une unité glucose et R¹ est un groupe alkyle en C₆-C₂₂, de préférence Cs-C₁₆ ou C₈-C₁₀, et m est un entier positif compris entre 1 et 10.

Dans un mode de réalisation, la composition selon l'invention est caractérisée en ce que le au moins un tensio-actif non-nionique est un mélange d'alkylpolyglucosides dans lesquels R¹ est un groupe alkyle en C₈-C₁₀ et d'alkylpolyglucosides dans lesquels R¹ est un groupe alkyle en C₈-C₁₆, le ratio dudit mélange étant compris entre 60:40 et 90:10. De préférence, le ratio est égal à 80:20.

Dans un mode de réalisation, la composition selon l'invention est caractérisée en ce qu'elle comprend de 0,002 à 0,02 % en masse d'au moins un tensio-actif non-ionique choisi dans le groupe constitué par les alkylpolyglucosides. De préférence, la composition comprend de 0,004 à 0,01 % en masse d'au moins un tensio-actif non-ionique choisi dans le groupe constitué par les alkylpolyglucosides.

Dans un mode de réalisation, la composition selon l'invention est caractérisée en ce que le au moins un tensio-actif anionique est un mélange de C₈-C₁₈-alkyle aryle sulfonate, de C₈-C₁₈-alkyle éther sulfate et d'acide gras en C₈-C₁₈.

Dans un mode de réalisation, la composition selon l'invention est caractérisée en ce que le tensio-actif anionique comprend du sodium dodecylbenzene sulfonate, du sodium pareth sulfate et du potassium cocoate.

Dans un mode de réalisation, la composition selon l'invention est caractérisée en ce qu'elle comprend de 0,005 à 0,03 % en masse d'au moins un tensio-actif anionique. De préférence, la composition comprend de 0,005 à 0,02 % en masse d'au moins un tensio-actif anionique.

Dans un mode de réalisation, la composition selon l'invention est caractérisée en ce qu'elle comprend en outre d'autres tensio-actifs tels que les C₈-C₁₈-alcools éthoxylés et les C₈-C₁₈ dialcoolamides.

Dans un mode de réalisation, l'activateur alcalin est un mélange de potasse (KOH) et/ou de soude (NaOH) et de silicates de sodium et de potassium, ledit mélange comprenant, en pourcentages massiques : H₂O de 60 à 70 %, K₂O de 10 à 16 %, Na₂O de 1 à 4 % et SiO₂ de 10 à 20 %.

Dans un mode de réalisation, la composition selon l'invention est caractérisée en ce qu'elle comprend en outre de 0,5 à 3 % en masse d'un plastifiant, ledit plastifiant étant de préférence un polycarboxylate. De préférence, la composition comprend de 0,5 à 2 % de plastifiant.

Dans un mode de réalisation, la composition selon l'invention est caractérisée en ce qu'elle comprend en outre de 1 à 5 % en masse d'un agent hydrophobe, de préférence choisi parmi les siliconates, les silanes, les siloxanes et leurs mélanges. De préférence, la composition comprend entre 2 et 4,5 % d'agent hydrophobe.

Dans un mode de réalisation, on utilise une émulsion de résine silicone et de polydiméthylsiloxane. La mousse peut également être traitée en surface après expansion et durcissement par une émulsion, mélange de silane et siloxane, en quantité inférieure ou égale à 1 % en masse.

Dans un mode de réalisation, la composition selon l'invention est caractérisée en ce qu'elle comprend en outre de 0,2 à 5 % en masse une protéine animale ou végétale, de préférence de l'ovalbumine ou un isolat de protéine de soja. De préférence, la composition comprend entre 1 et 4 % de protéine.

Dans un mode de réalisation, la composition selon l'invention est caractérisée en ce qu'elle comprend en outre de 0,1 à 4 % en masse d'agent stabilisant, de préférence du triethylcitrate. De préférence, la composition comprend entre 0,5 et 1,5 % d'agent stabilisant.

Dans un mode de réalisation, la composition selon l'invention est caractérisée en ce qu'elle comprend en outre de 1 à 9 % d'un liant hydraulique ou mélange de liant hydraulique, de préférence choisi parmi les donneurs de CaO, tels que du ciment de Portland, du plâtre de Paris de l'hydroxyde de calcium ou de la chaux éteinte. De préférence, la composition comprend de 3 à 7 % de liant hydraulique.

Dans un mode de réalisation, la composition selon l'invention est caractérisée en ce qu'elle comprend en outre des fibres ou charges, en particulier choisis parmi des microfibres textiles, microfibres de cellulose et des glumelles de grains de céréales.

L'invention concerne également une utilisation d'une composition selon l'invention pour la préparation d'un mousse minérale incombustible.

Dans ce qui suit, il sera fait référence à ces compositions sous l'appellation « composition A » ou « partie A ».

Dans un mode réalisation, l'invention concerne également un kit comprenant :
(1) une composition A selon l'invention et
(2) une composition B comprenant un agent d'expansion.

Un kit selon l'invention peut en particulier être utilisé dans les situations d'urgence. Le mélange est réalisé sur place au moment de la projection ou de l'application sur la surface à recouvrir ou de la cavité à colmater.

Dans un mode de réalisation, l'agent d'expansion comprend de la poudre d'aluminium, exempte de nitrure d'aluminium et d'oxyde d'aluminium.

Dans un mode de réalisation, l'agent d'expansion est de d'aluminium broyé dont la granulométrie est continue ou étalée. On utilise un diamètre statistique moyen pour caractériser la poudre et le diamètre des grains maximum (ici strictement inférieur à 250 µm). Le diamètre statistique moyen correspond à 50 % des grains ou particules qui sont supérieurs ou inférieurs.

Dans un mode de réalisation, l'agent d'expansion est de la poudre d'aluminium, exempte de nitrure d'aluminium ou d'oxyde d'aluminium, dont les grains ont un diamètre compris entre 25 et 90 µm, de préférence entre 45 et 90 µm, ou encore entre 45 et 75 µm, lesdits grains d'aluminium étant recouverts d'une couche de glycols de haute masse moléculaire.

Dans un mode de réalisation, la poudre d'aluminium représente de 0,2 à 20 % en masse de la composition comprenant l'agent d'expansion.

Dans un mode de réalisation, la composition comprenant l'agent d'expansion comprend en outre du carbonate de calcium en poudre.

Dans un mode de réalisation, le carbonate de calcium représente de 25 à 90 % en masse de la composition comprenant l'agent d'expansion.

Dans un mode de réalisation, la composition comprenant l'agent d'expansion comprend de 0,2 à 20 % d'aluminium et de 80 à 90 % de carbonate de calcium.

Dans un mode de réalisation, la composition comprenant l'agent d'expansion comprend en outre un liant hydraulique. Le liant hydraulique peut être identique ou différent du liant hydraulique de la composition A.

Dans un mode de réalisation, l'agent d'expansion comprend du peroxyde d'hydrogène ou une source de peroxyde d'hydrogène.

Dans un mode de réalisation, l'agent d'expansion est une solution aqueuse de peroxyde d'hydrogène.

Dans un mode de réalisation, la source de peroxyde d'hydrogène est un perborate ou un percarbonate. Dans un mode de réalisation, l'agent d'expansion est le perborate de sodium (Na₂B₂O₄(OH)₄) ou le percarbonate de sodium (2Na₂CO₃·3H₂O₂). Dans un mode de réalisation, on utilise en outre des traces de MnO₂ ou de poudre d'aluminium pour catalyser la formation de peroxyde et la libération d'oxygène.

Dans un mode de réalisation, l'invention concerne un procédé de préparation de mousse minérale incombustible.

Le procédé selon l'invention consiste en la mise en contact d'une partie A (ou composition A) avec une partie B (ou composition B). Cette mise en contact est suivie d'une expansion et d'un durcissement qui conduisent à la formation d'une mousse selon l'invention.

De manière avantageuse, l'expansion est rapide et se déroule en quelques minutes. Le durcissement est simultané, ou postérieur à l'étape d'expansion et se déroule également en quelques minutes. Dans un mode de réalisation, les propriétés de la mousse continuent d'évoluer avec le séchage de ladite mousse. En particulier, les propriétés peuvent continuer à évoluer sur une période allant jusqu'à 40 jours.

Un durcissement complet est généralement observé après une période d'au moins 100 heures, de préférence 72 heures. Cette période est considérablement raccourcie en cas de durcissement accéléré par apport de chaleur.

Dans un mode de réalisation, le procédé de préparation d'une mousse minérale incombustible comprend les étapes de :
a) mise en contact, en solution aqueuse,
   ∘ d'au moins un liant inorganique pouzzolanique comprenant du métakaolin,
   ∘ d'au moins un activateur alcalin choisi dans le groupe hydroxydes de métaux alcalins et des silicates de métaux alcalins et leurs mélanges,
   ∘ d'au moins un épaississant,
   ∘ d'au moins un tensio-actif anionique choisi dans le groupe constitué par les C₈-C₁₈-alkyle sulfates, les C₈-C₁₈-alkyle éther sulfates, les acides Cs-C₁₈-alkyle aryle sulfonique, les acides gras en C₈-C₁₈ et leur mélange, et
   ∘ d'au moins un tensioactif non-ionique choisi dans le groupe constitué par les alkylpolyglucosides,
b) mélange et obtention d'une composition A,
c) mise en contact de la composition A de l'étape b) avec une composition B comprenant un agent d'expansion,
d) expansion par génération de gaz in situ au moyen de l'agent d'expansion et
e) durcissement,
caractérisé en ce que la quantité d'épaississant par rapport à la masse totale de la composition obtenue à l'étape b) est comprise entre 0,05 à 1,3 %, la quantité de tensio-actif anionique par rapport à la masse totale de la composition obtenue à l'étape b) est comprise entre 0,002 et 0,04 %, la quantité de tensio-actif non-ionique choisi dans le groupe constitué par les alkylpolyglucosides par rapport à la masse totale de la composition obtenue à l'étape b) est comprise entre 0,001 et 0,02 %, l'agent d'expansion est choisi dans le groupe constitué de poudre d'aluminium, exempte de nitrure d'aluminium et d'oxyde d'aluminium, et du peroxyde d'hydrogène.

Dans un mode de réalisation, le procédé est caractérisé en ce qu'un liant inorganique pouzzolanique comprenant du métakaolin est le métakaolin et représente entre 20 et 60 % de la masse de la composition obtenue à l'étape b), de préférence entre 30 et 40 %.

Dans un mode de réalisation, le procédé est caractérisé en ce que le durcissement de l'étape e) est accéléré au moyen d'un apport de chaleur.

Dans un mode de réalisation, le procédé est caractérisé en ce qu'il comprend en outre un étape f) de séchage.

Dans un mode de réalisation, le procédé est caractérisé en ce que le durcissement accéléré de l'étape e) et le séchage de l'étape f) sont réalisés simultanément par apport de chaleur.

Dans un mode de réalisation, le procédé est caractérisé en ce que le pH de la composition obtenue à l'étape b) est compris entre 12 et 14.

Dans un mode de réalisation, le procédé est caractérisé en ce que l'épaississant est choisi dans le groupe constitué par les amidons solubles dans l'eau tel que l'amidon prégel, les galactomannannes tels que la gomme guar, la gomme de xanthane, les argiles telles que la bentonite ou la montmorillonite et les dérivés de cellulose tel que la méthyle éthyle cellulose.

Dans un mode de réalisation, le procédé est caractérisé en ce que la composition obtenue à l'étape b) comprend de 0,06 à 1,3 % en masse d'épaississant.

Dans un mode de réalisation, le procédé est caractérisé en ce que la composition obtenue à l'étape b) comprend de 0,06 à 0,6 % en masse d'épaississant.

Dans un mode de réalisation, le procédé est caractérisé est caractérisé en ce que la composition obtenue à l'étape b) comprend de 0,1 à 0,6 % en masse d'épaississant.

Dans un mode de réalisation, le procédé est caractérisé est caractérisé en ce que la composition obtenue à l'étape b) comprend de 0,1 à 0,3 % en masse d'épaississant.

Dans un mode de réalisation, le procédé est caractérisé en ce que le au moins un tensio-actif non-ionique est un alkylpolyglucoside ou un mélange d'alkylpolyglucosides de formule H-(C₆H₁₀O₅)ₘ-O-R¹, dans laquelle (C₆H₁₀O₅) est une unité glucose et R¹ est un groupe alkyle en C₆-C₂₂, de préférence C₈-C₁₆ ou C₈-C₁₀, et m est un entier positif compris entre 1 et 10.

Dans un mode de réalisation, le procédé est caractérisé en ce que le au moins un tensio-actif non-nionique est un mélange, ayant un ratio compris entre 60:40 et 90:10, d'alkylpolyglucosides dans lesquels R¹ est un groupe alkyle en C₈-C₁₀ et d'alkylpolyglucosides dans lesquels R¹ est un groupe alkyle en C₈-C₁₆. De préférence, le ratio est égal à 80:20.

Dans un mode de réalisation, le procédé est caractérisé en ce que la composition obtenue à l'étape b) comprend de 0,002 à 0,02 % en masse d'au moins un tensio-actif non-ionique choisi dans le groupe constitué par les alkylpolyglucosides. De préférence, la composition obtenue à l'étape b) comprend de 0,004 à 0,01 % en masse d'au moins un tensio-actif non-ionique choisi dans le groupe constitué par les alkylpolyglucosides.

Dans un mode de réalisation, le procédé est caractérisé en ce que le tensio-actif anionique est un mélange de C₈-C₁₈-alkyle aryle sulfonate, de C₈-C₁₈-alkyle éther sulfate et d'acide gras en C₈-C₁₈.

Dans un mode de réalisation, le procédé est caractérisé en ce que le tensio-actif anionique comprend du sodium dodecylbenzene sulfonate, du sodium pareth sulfate et du potassium cocoate.

Dans un mode de réalisation, le procédé est caractérisé en ce que la composition obtenue à l'étape b) comprend de 0,005 à 0,03 % en masse d'au moins un tensio-actif anionique. De préférence, la composition obtenue à l'étape b) comprend de 0,005 à 0,025 % en masse d'au moins un tensio-actif anionique.

Dans un mode de réalisation, le procédé est caractérisé en ce que la composition obtenue à l'étape b) comprend en outre d'autres tensio-actifs tels que les C₈-C₁₈-alcools éthoxylés et les C₈-C₁₈ dialcoolamides.

Dans un mode de réalisation, le procédé est caractérisé en ce que l'activateur alcalin est un mélange de potasse (KOH) et/ou de soude (NaOH) et de silicates de sodium et de potassium, ledit mélange comprenant, en pourcentages massiques : H₂O de 60 à 70 %, K₂O de 10 à 16 %, Na₂O de 1 à 4 % et SiO₂ de 10 à 20 %.

Dans un mode de réalisation, le procédé est caractérisé en ce que la composition obtenue à l'étape b) comprend en outre de 0,5 à 3 % en masse d'un plastifiant, ledit plastifiant étant de préférence un polycarboxylate. De préférence, la composition obtenue à l'étape b) comprend de 0,5 à 2 % de plastifiant.

Dans un mode de réalisation, le procédé est caractérisé en ce que la composition obtenue à l'étape b) comprend en outre de 1 à 5 % en masse un agent hydrophobe, de préférence choisi parmi les siliconates les silanes les siloxanes et leurs mélanges. De préférence, la composition obtenue à l'étape b) comprend de 2 à 4,5 % d'agent hydrophobe.

Dans un mode de réalisation, le procédé est caractérisé en ce que la composition obtenue à l'étape b) comprend en outre de 0,2 à 5 % en masse une protéine animale ou végétale, de préférence de l'ovalbumine. De préférence, la composition obtenue à l'étape b) comprend de 1 à 4 % de protéine.

Dans un mode de réalisation, le procédé est caractérisé en ce que la composition obtenue à l'étape b) comprend en outre de 0,1 à 4 % en masse d'agent stabilisant, de préférence du triethylcitrate. De préférence, la composition obtenue à l'étape b) comprend de 0,5 à 1,5 % d'agent stabilisant.

Dans un mode de réalisation, le procédé est caractérisé en ce que la composition obtenue à l'étape b) comprend en outre de 1 à 9 % d'un liant hydraulique ou mélange de liant hydraulique, de préférence choisi parmi les donneurs de CaO, tels que du ciment de Portland, du plâtre de Paris de l'hydroxyde de calcium ou de la chaux éteinte. De préférence, la composition obtenue à l'étape b) comprend de 3 à 7 % de liant hydraulique.

Dans un mode de réalisation, le procédé est caractérisé en ce que le gaz généré in situ à l'étape d) est le dihydrogène (H₂) ou le dioxygène (O₂).

Dans un mode de réalisation, le procédé est caractérisé en ce que l'agent d'expansion est de la poudre d'aluminium, exempte de nitrure d'aluminium ou d'oxyde d'aluminium, dont les grains ont un diamètre compris entre 25 et 90 µm, de préférence entre 45 et 90 µm, ou encore entre 45 et 75 µm, lesdits grains d'aluminium étant recouvert d'une couche de glycols de hautes masse moléculaire.

Dans un mode de réalisation, le procédé est caractérisé en ce que la quantité de poudre d'aluminium représente de 0,2 à 20 % en masse de la composition comprenant l'agent d'expansion.

Dans un mode de réalisation, le procédé est caractérisé en ce que la composition comprenant l'agent d'expansion comprend en outre du carbonate de calcium en poudre.

Dans un mode de réalisation, le procédé est caractérisé en ce que la quantité de carbonate de calcium représente de 20 à 90 % en masse de la composition comprenant l'agent d'expansion.

Dans un mode de réalisation, le procédé est caractérisé en ce que la composition comprenant l'agent d'expansion comprend de 0,2 à 20 % d'aluminium et de 80 à 90 % de carbonate de calcium.

Dans un mode de réalisation, le procédé est caractérisé en ce que la composition comprenant l'agent d'expansion comprend en outre un liant hydraulique, ledit liant hydraulique étant identique ou différent de celui éventuellement présent dans la composition obtenue à l'étape b).

Dans un mode de réalisation, le procédé est caractérisé en ce que l'agent d'expansion est une solution aqueuse de peroxyde d'hydrogène ou une source de peroxyde d'hydrogène.

Dans un mode de réalisation, la source de peroxyde d'hydrogène est un perborate ou un percarbonate. Dans un mode de réalisation, l'agent d'expansion est le perborate de sodium (Na₂B₂O₄(OH)₄) ou le percarbonate de sodium (2Na₂CO₃·3H₂O₂). Dans un mode de réalisation, on utilise en outre des traces de MnO₂ ou de poudre d'aluminium pour catalyser la formation de peroxyde et la libération d'oxygène.

Dans un mode de réalisation, le procédé est caractérisé en ce que le durcissement de l'étape e) est consécutif à l'expansion.

Dans un mode de réalisation, le procédé est caractérisé en ce que la durée de l'étape d) d'expansion est comprise entre 1 et 10 minutes, de préférence entre 1 et 5 minutes.

Dans un mode de réalisation, le procédé est caractérisé en ce que la durée de l'étape e) de durcissement est comprise entre 4 et 10 minutes, de préférence 5 et 8 minutes.

### Exemples

### Exemple 1 :

**Tableau 1 : composition des parties A et B**

| Composant | Détail | Quantité | % |
|---|---|---|---|
| PARTIE A | | g | 100 |
| Métakaolin | | 37,4 | 30,16 |
| Solution d'activation | Mélange de KOH et de silicates de Na et de K (H₂O:66,3;K₂O:13,9; Na₂O:2; SiO₂ (Total) 15,2:SiO₂:K₂O: 8,56;SiO₂:NaO:6,62;OH (Total) 14,4) | 23,3 | 19,18 |
| | *Note : soit 23,3g de mat. sèches* | | |
| Agent hydrophobe | | 0 | 0 |
| Eau | | 50,4 | 41,2 |
| Tensioactif I | Dilution d'Empicol XHL300 dans l'eau | 0,011 | 0,009 |
| | *Note* = *1:11* (*g*/*g*) *x 67% soit 0,011 g de mat. actives* | | |
| Tensioactif II | Dilution d'un mélange de simulsol SL8/ SL826 (80:20) dans l'eau | 0,005 | 0,004 |
| | *Note* = *1:11(g*/*g) x 60%* = *soit 0,005 g de mat. actives* | | |
| Épaississant | Amidon de maïs prégel | 0,2 | 0,16 |
| Plastifiant | polycarboxylates (30% de matières sèches) | 0,8 | 0,64 |
| Tensioactif III (agent stabilisant) | triéthylcitrate ou 1,2,3-propane tricarboxylic acid, 2-hydroxy, triethyl ester (couple avec l'albumine) | 1 | 0,82 |
| Ciment cpj32 | | 5 | 4,09 |
| CaSO4.1/2H₂O | Plâtre non retardé | 1,5 | 1,23 |
| Albumine d'oeuf en poudre | Fraction de | 2,5 | 2,04 |

| PARTIE B | | g | 100 |
|---|---|---|---|
| Aluminium | Poudre d'aluminium traité avec glycols à poids moléculaire (PM) élevé, diamètre statique moyen < 75 µm (ici 52 ou 48 µm) | 0,48 | 10 |
| Carbonate de calcium micronisé | 90 % < à 75 - 90 µm | 4,32 | 90 |

Toutes les quantités indiquées dans le tableau 1 sont des quantités en matière sèche. La totalité de l'eau, toutes origines confondues, est renseignée à la ligne « eau ».

### Mode opératoire :

La partie A est préparée comme suit :
(1) le métakaolin en poudre est ajouté en pluie et dispersé sous agitation dans la solution aqueuse et alcaline d'activation pendant 3 à 5 min max. ;
(2) l'agitation de la suspension obtenue en (1) est poursuivie à 800 rpm pendant 30 à 35 min. (faible augmentation de la température de la suspension, environ 8°C). La suspension sera éventuellement refroidie entre 18 et 25°C si la température ambiante est élevée (> 25°C) ;
(3) sont ensuite ajoutés successivement et sous agitation intense, l'agent hydrophobe (facultatif), l'amidon en poudre, le dispersant (polycarboxylate).
(4) après 2 minutes les poudres de ciment, le plâtre et de l'albumine puis les tensioactifs sont ajoutés successivement au mélange et dispersés sous la même agitation pendant 5 minutes ; le mélange final obtenue présente la consistance d'une crème épaisse.

La partie B est ajoutée en fin de l'opération précédente et mélangée sous agitation intensive pendant 20 à 30 sec.

L'expansion du mélange intervient à partir d'une minute et se termine à 5 minutes. La consistance de la mousse s'affermit et durcit entre 5 et 8 min.

Pour son durcissement complet, la mousse minérale obtenue est conservée en enceinte fermée ou sous film (ou bâche) plastique pendant une durée de 72 H au moins soit à température ambiante, soit à une température inférieure à 100°C mais toujours sous film plastique (le durcissement est alors accéléré). La mousse est ensuite stockée à température ambiante pour assurer son séchage et le développement de sa propriété hydrophobe (qui est réalisé par une réaction avec le dioxyde de carbone (CO₂) de l'air.

On mesure un coefficient de conductivité thermique de 0,06 W/m²K. On observe une porosité ouverte pour sa respiration. La résistance thermique de la mousse est reconnue jusqu'à 1200°C. Elle peut être utilisée comme barrière coupe-feu et est conforme aux classifications « résistance au feu » et « réaction au feu » précitées.

### Exemple 2 :

La mousse de l'exemple 2 a été préparée selon le procédé de l'exemple 1 avec les quantités et produits suivants :

**Tableau 2 : composition des parties A et B**

| Composant | Détail | Quantité |
|---|---|---|
| PARTIE A | | g |
| Métakaolin | | 37,4 |
| Solution d'activation | Mélange de KOH et de silicates de Na et de K (H₂O:66,3;K₂O:13,9; Na₂O:2; SiO₂ (Total) 15,2:SiO₂:K₂O: 8,56;SiO₂:NaO:6,62;OH (Total) 14,4) | 69,1 |
| Agent hydrophobe | Solution aqueuse de méthyl-siliconate de K (54 % mat. sèches) | 7 |
| Eau | | 0 |
| Tensioactif I | Dilution d'Empicol XHL300 dans l'eau =1:11 (g/g) | 0,2 |
| Tensioactif II | Dilution d'un mélange de simulsol SL8/ SL826 (80:20) dans l'eau =1:11 (g/g) | 0,1 |
| Épaississant | Amidon de maïs prégel | 0,2 |
| Plastifiant | polycarboxylates (30% de matières sèches) | 2,6 |
| Tensioactif III (agent stabilisant) | triéthylcitrate ou 1,2,3-propane tricarboxylic acid, 2-hydroxy, triethyl ester (couple avec l'albumine) | 1 |
| Ciment cpj32 | | 5 |
| CaSO₄.1/2H₂O | Plâtre non retardé | 1,5 |
| Albumine d'oeuf en poudre | Fraction de | 2,5 |

| PARTIE B | | |
|---|---|---|
| Aluminium | Poudre d'aluminium traité avec glycols à PM élevé, diamètre statique moyen < 75 µm (ici 52 ou 48 µm) | 0,48 |
| Carbonate de calcium micronisé | 90% < à 75 - 90 µm | 4,32 |

La mousse minérale obtenue selon l'exemple 2 conserve les propriétés et les avantages de la mousse obtenue à l'exemple 1. Elle est par ailleurs rendue hydrophobe : elle peut constituer une barrière de protection supplémentaire.

### Exemple 3

La mousse de l'exemple 3 a été préparée selon le procédé de l'exemple 1 avec les quantités et produits suivants :

**Tableau 3 : composition de la mousse n°3 avant expansion/durcissement**

| Composant | détail | quantité |
|---|---|---|
| PARTIE A | | g |
| Métakaolin | | 37,4 |
| Solution d'activation | Mélange de KOH et de silicates de Na et de K (H₂O:66,3;K₂O:13,9; Na₂O:2; SiOz (Total) 15,2:SiO₂:K₂O: 8,56;SiO₂:NaO:6,62;OH (Total) 14,4) | 69,1 |
| Agent hydrophobe | Solution aqueuse de méthyl-siliconate de K (54 % mat. sèches) | 7 |
| Tensioactif I | Dilution d'Empicol XHL300 dans l'eau =1:11 (g/g) | 0,2 |
| Tensioactif II | Dilution d'un mélange de simulsol SL8/ SL826 (80:20) dans l'eau =1:11 (g/g) | 0,1 |
| Épaississant | Amidon de maïs prégel | 0,2 |
| Plastifiant | Polycarboxylates (30% de matières sèches) | 2,6 |
| Tensioactif III (agent stabilisant) | triéthylcitrate ou 1,2,3-propane tricarboxylic acid, 2-hydroxy, triethyl ester (couple avec l'albumine) | 1 |
| Ciment cpj32 | | 5 |
| CaSO₄.1/2H₂O | Plâtre non retardé | 1,5 |
| Albumine d'oeuf en poudre | Fraction de | 2,5 |
| Microfibres | Textiles, végétales, papier, glumelles (longueur<5mm) | 4 |

| PARTIE B | | |
|---|---|---|
| Aluminium | Poudre d'aluminium traité avec glycols à PM élevé, diamètre statique moyen < 75 µm (ici 52 ou 48 µm) | 0,48 |
| Carbonate de calcium micronisé | 90% < à 75 - 90 µm | 4,32 |

La mousse minérale n°3 obtenue selon l'exemple 3 conserve les propriétés et les avantages de la mousse obtenue à l'exemple 2.

### Contre-exemples :

Les contre-exemples suivants ont été préparés selon le protocole de l'exemple 1 à la différence de la combinaison spécifique de tensio-actifs.

Les mousses n° 4, 5 et 6 sont des contre-exemples.
Contre-exemple n°1 : tensioactif EMPICOL HXL-300 seul.

**Tableau 4 : composition de la mousse n°4 avant expansion/durcissement**

| Composant | Détail | Quantité |
|---|---|---|
| PARTIE A | | g |
| Métakaolin | | 37,4 |
| Solution d'activation | Mélange de KOH et de silicates de Na et de K (H₂O:66,3;K₂O:13,9; Na₂O:2; SiO₂ (Total) 15,2:SiO₂:K₂O: 8,56;SiO₂:NaO:6,62;OH (Total) 14,4) | 69,1 |
| Agent hydrophobe | Solution aqueuse de méthyl-siliconate de K (54 % mat. sèches) | 7 |
| Tensioactif I | Dilution d'Empicol XHL300 dans l'eau = 1: 11 (g/g) | 0,26 |
| Épaississant | Amidon de maïs prégel | 0,2 |
| Plastifiant | Polycarboxylates (30% de matières sèches) | 1,2 |
| Ciment cpj32 | | 5,5 |
| CaSO₄.1/2H2O | Plâtre non retardé | 3,4 |

| PARTIE B | | |
|---|---|---|
| Aluminium | Poudre d'aluminium traité avec glycols à PM élevé, diamètre statique moyen < 75 µm (ici 52 ou 48 µm) | 0,47 |
| Carbonate de calcium micronisé | 90% < à 75 - 90 µm | 4,23 |

L'expansion de la mousse atteint 600 ml puis est suivi d'une relaxation (effondrement) de ce volume qui termine à 500 ml malgré un taux plus élevé en ciment et en plâtre (source de CaO). (L'objectif étant d'assurer un durcissement à la fin de l'expansion maximale sans retrait ou relaxation).

Contre-exemple n°2 : tensioactifs SIMULSOL seuls.

**Tableau 5 : composition de la mousse n°5 avant expansion/durcissement**

| Composant | Détail | Quantité |
|---|---|---|
| PARTIE A | | g |
| Métakaolin | | 37,4 |
| Solution d'activation | Mélange de KOH et de silicates de Na et de K (H₂O:66,3;K₂O:13,9; Na₂O:2; SiO₂ (Total) 15,2:SiO₂:K₂O: 8,56;SiO₂:NaO:6,62;OH (Total) 14,4) | 69,1 |
| Agent hydrophobe | Solution aqueuse de méthyl-siliconate de K (54 % mat. sèches) | 7 |
| Tensioactif II | Dilution d'un mélange de simulsol SL8/ SL826 (80:20) dans l'eau =1:11 (g/g) | 0,22 |
| Épaississant | Amidon de maïs prégel | 0,2 |
| Plastifiant | Polycarboxylates (30% de matières sèches) | 1,2 |
| Ciment cpj32 | | 5,5 |
| CaSO₄.1/2H₂O | Plâtre non retardé | 3,4 |

| PARTIE B | | |
|---|---|---|
| Aluminium | Poudre d'aluminium traité avec glycols à PM élevé, diamètre statique moyen < 75 µm (ici 52 ou 48 µm) | 0,47 |
| Carbonate de calcium micronisé | 90% < à 75 - 90 µm | 4,23 |

L'expansion de la mousse plafonne à 460 ml suivi d'une perte du volume qui termine à 400 ml. Il n'y a pas de réduction des pertes de gaz et donc d'amélioration du volume final de la mousse. La stabilisation de celle-ci par durcissement n'est pas non plus améliorée.

Contre-exemple n°3 : triéthylcitrate et l'albumine en poudre sans les tensioactifs I et II

**Tableau 6 : composition de la mousse n°6 avant expansion/durcissement**

| Composant | Détail | Quantité |
|---|---|---|
| PARTIE A | | g |
| Métakaolin | | 37,4 |
| Solution d'activation | Mélange de KOH et de silicates de Na et de K (H₂O:66,3;K₂O:13,9; Na₂O:2; SiO₂ (Total) 15,2:SiO₂:K₂O: 8,56;SiO₂:NaO:6,62;OH (Total) 14,4) | 69,1 |
| Agent hydrophobe | Solution aqueuse de méthyl-siliconate de K (54 % mat. sèches) | 7 |
| Épaississant | Amidon de maïs prégel | 0,2 |
| Plastifiant | Polycarboxylates (30% de matières sèches) | 2,1 |
| Tensioactif III (agent stabilisant) | triéthylcitrate ou 1,2,3-propane tricarboxylic acid, 2-hydroxy, triethyl ester (couple avec l'albumine) | 1,5 |
| Ciment cpj32 | | 5 |
| CaSO₄.1/2H₂O | Plâtre non retardé | 1,8 |
| Albumine d'oeuf en poudre | Fraction de | 2,5 |

| PARTIE B | | |
|---|---|---|
| Aluminium | Poudre d'aluminium traité avec glycols à PM élevé, diamètre statique moyen < 75 µm (ici 52 ou 48 µm) | 0,48 |
| Carbonate de calcium micronisé | 90% < à 75 - 90 µm | 4,32 |

L'expansion de la mousse atteint 500 ml et se stabilise. On observe une expansion régulière mais aussi une perte importante de gaz. Enfin après durcissement une coupe de la mousse révèle une porosité très hétérogène (mélange de pores gros et fins), ce qui souligne le rôle complémentaire des autres tensioactifs.

## Revendications

1. Mousse minérale incombustible comprenant :
- de 45 à 90 % en masse de liant inorganique pouzzolanique comprenant du métakaolin polymérisé,
- de 0,08 à 2 % en masse d'épaississant,
- de 0,003 à 0,07 % en masse d'au moins un tensio-actif anionique choisi dans le groupe constitué par les C₈-C₁₈-alkyle sulfates, les C₈-C₁₈-alkyle éther sulfates, les acides C₈-C₁₈-alkyle aryle sulfonique, les acides gras en C₈-C₁₈ et leur mélange,
- de 0,002 à 0,03 % en masse d'au moins un tensioactif non-ionique choisi dans le groupe constitué par les alkylpolyglucosides,
- une phase gazeuse.

2. Mousse selon la revendication précédente **caractérisée en ce que** l'épaississant est choisi dans le groupe constitué par les amidons solubles dans l'eau tel que l'amidon prégel et les galactomannannes tels que la gomme guar, la gomme de xanthane, les argiles telles que la bentonite ou la montmorillonite ou les dérivés de cellulose tel que la méthyle éthyle cellulose.

3. Mousse selon l'une quelconque des revendications précédentes **caractérisée en ce que** le au moins un tensio-actif non-ionique est un alkylpolyglucoside ou un mélange d'alkylpolyglucosides de formule H-(C₆H₁₀O₅)ₘ-O-R¹, dans laquelle (C₆H₁₀O₅) est une unité glucose et R¹ est un groupe alkyle en C₆-C₂₂, de préférence C₈-C₁₆ ou C₈-C₁₀, et m est un entier positif compris entre 1 et 10, 1 ≤ m ≤ 10.

4. Mousse selon l'une quelconque des revendications précédentes **caractérisée en ce que** le au moins un tensio-actif anionique est un mélange de C₈-C₁₈-alkyle aryle sulfonate, de C₈-C₁₈-alkyle éther sulfate et d'acide gras en C₈-C₁₈.

5. Support comprenant une mousse selon l'une quelconque des revendications 1 à 4.

6. Composition pour la préparation d'une mousse minérale incombustible selon l'une quelconque des revendications 1 à 4 :
- de 20 à 60 % en masse d'au moins un liant inorganique pouzzolanique comprenant du métakaolin,
- de 0,05 à 1,3 % en masse d'épaississant,
- de 0,002 à 0,04 % d'au moins un tensio-actif anionique choisi dans le groupe constitué par les C₈-C₁₈-alkyle sulfates, les C₈-C₁₈-alkyle éther sulfates, les acides C₈-C₁₈-alkyle aryle sulfonique, les acides gras en C₈-C₁₈ et leurs mélanges,
- de 0,001 à 0,02 % d'au moins un tensioactif non-ionique choisi dans le groupe constitué par les alkylpolyglucosides,
- au moins un activateur alkalin choisi dans le groupe hydroxydes de métaux alkalins et des silicates de métaux alcalins et leurs mélanges,
- de l'eau qsp.

7. Utilisation d'une composition selon la revendication précédente pour la préparation d'un mousse minérale incombustible.

8. Kit comprenant :
(1) une composition selon l'une quelconque des revendications 1 à 4,
(2) une composition comprenant un agent d'expansion.

9. Procédé de préparation d'une mousse minérale incombustible selon l'une quelconque des revendications 1 à 4 comprenant les étapes de :
a) mise en contact, en solution aqueuse,
∘ d'au moins un liant inorganique pouzzolanique comprenant du métakaolin,
∘ d'au moins un activateur alcalin choisi dans le groupe hydroxydes de métaux alcalins et des silicates de métaux alcalins et leurs mélanges,
∘ d'au moins un un épaississant,
∘ d'au moins un tensio-actif anionique choisi dans le groupe constitué par les C₈-C₁₈-alkyle sulfates, les C₈-C₁₈-alkyle éther sulfates, les acides Cs-C₁₈-alkyle aryle sulfonique et les acides gras en C₈-C₁₈, et
∘ d'au moins un tensioactif non-ionique choisi dans le groupe constitué par les alkylpolyglucosides,
b) mélange et obtention d'une composition,
c) mise en contact de la composition de l'étape b) avec une composition comprenant un agent d'expansion,
d) expansion par génération de gaz in situ au moyen de l'agent d'expansion et
e) durcissement,
**caractérisé en ce que** la quantité d'épaississant par rapport à la masse totale de la composition obtenue à l'étape b) est comprise entre 0,05 et 0,4 %, la quantité de tensioactif anionique par rapport à la masse totale de la composition obtenue à l'étape b) est comprise entre 0,002 et 0,02 %, la quantité de tensio-actif non-ionique choisi dans le groupe constitué par les alkylpolyglucosides par rapport à la masse totale de la composition obtenue à l'étape b) est comprise entre 0,001 et 0,02 %, l'agent d'expansion est choisi dans le groupe constitué de poudre d'aluminium, exempte de nitrure d'aluminium et d'oxyde d'aluminium, et de péroxyde d'hydrogène.

10. Procédé selon la revendication précédente **caractérisé en ce qu'**il comprend en outre un étape f) de séchage.

11. Procédé selon la revendication précédente **caractérisé en ce que** le durcissement de l'étape e) est consécutif à l'expansion de l'étape d).

12. Procédé selon la revendication précédente **caractérisé en ce que** la durée de l'étape d'expansion est comprise entre 1 et 10 minutes, de préférence entre 1 et 5 minutes et **en ce que** la durée de l'étape d) de durcissement est comprise entre 4 et 10 minutes, de préférence 5 et 8 minutes.

## Patentansprüche

1. Nicht brennbarer Mineralschaum umfassend:
- 45 bis 90 Massen-% eines anorganischen puzzolanischen Bindemittels umfassend polymerisiertes Metakaolin,
- 0,08 bis 2 Massen-% Verdickungsmittel,
- 0,003 bis 0,07 Massen-% wenigstens eines anionischen Tensids, das ausgewählt ist aus der Gruppe bestehend aus C₈-C₁₈-Alkylsulfaten, C₈-C₁₈-Alkylethersulfaten, C₈-C₁₈- Alkylarylsulfonsäuren, C₈-C₁₈-Fettsäuren und deren Mischung,
- 0,002 bis 0,03 Massen-% von wenigstens einem nicht-ionischen Tensid, das ausgewählt ist aus der Gruppe bestehend aus Alkylpolyglucosiden;
- eine Gasphase.

2. Schaum nach dem vorangehenden Anspruch, **dadurch gekennzeichnet, dass** das Verdickungsmittel ausgewählt ist aus der Gruppe bestehend aus in Wasser löslichen Stärken wie vorgefrorene Stärke und Galaktomannanen wie Guargummi, Xanthangummi, Tonen wie Bentonit oder Montmorillonit oder Cellulosederivaten wie Methylethylcellulose.

3. Schaum nach einem der vorangehenden Ansprüche, **dadurch gekennzeichnet, dass** das wenigstens eine nicht-ionische Tensid ein Alkylpolyglucosid oder eine Mischung von Alkylpolyglucosiden der Formel H-(C₆H₁₀O₅)ₘ-O-R¹ ist, wobei (C₆H₁₀O₅) eine Glukoseeinheit und R¹ eine Alkylgruppe mit C₆-C₂₂ ist, bevorzugterweise C₈-C₁₆ oder C₈-C₁₀, und m eine ganze positive Zahl ist zwischen 1 und 10, 1 ≤ m ≤ 10.

4. Schaum nach einem der vorangehenden Ansprüche, **dadurch gekennzeichnet, dass** das wenigstens eine anionische Tensid eine Mischung aus C₈-C₁₈-Alkylarylsulfonat, C₈-C₁₈-Alkylethersulfat und C₈-C₁₈-Fettsäure ist.

5. Träger umfassend einen Schaum nach einem der Ansprüche 1 bis 4.

6. Zusammensetzung für die Herstellung eines nicht brennbaren Mineralschaums nach einem der Ansprüche 1 bis 4:
- 20 bis 60 Massen-% wenigstens eines anorganischen puzzolanischen Bindemittels umfassend ein Metakaolin,
- 0,05 bis 1,3 Massen-% Verdickungsmittel,
- 0,002 bis 0,04 % wenigstens eines anionischen Tensids, das ausgewählt ist aus der Gruppe bestehend aus C₈-C₁₈-Alkylsulfaten, C₈-C₁₈-Alkylethersulfaten, C₈-C₁₈- Alkylarylsulfonsäuren, C₈-C₁₈-Fettsäuren und deren Mischungen,
- 0,001 bis 0,02 % wenigstens eines nicht-ionischen Tensids, das ausgewählt ist aus der Gruppe bestehend aus Alkylpolyglucosiden,
- wenigstens ein alkalischer Aktivator, der ausgewählt ist aus der Gruppe von Alkalimetallhydroxiden und Alkalimetallsilikaten und deren Mischungen,
- Rest Wasser.

7. Verwendung einer Zusammensetzung nach dem vorangehenden Anspruch für die Herstellung eines nicht brennbaren Mineralschaums.

8. Kit umfassend:
(1) eine Zusammensetzung nach einem der Ansprüche 1 bis 4,
(2) eine Zusammensetzung umfassend ein Treibmittel.

9. Verfahren zur Herstellung eine nicht brennbaren Mineralschaums nach einem der Ansprüche 1 bis 4, umfassend die Schritte:
a) In Kontakt bringen, in wässriger Lösung,
- wenigstens eines anorganischen puzzolanischen Bindemittels umfassend Metakaolin,
- wenigstens eines alkalischen Aktivators, der ausgewählt ist aus der Gruppe von Alkalimetallhydroxiden und Alkalimetallsilikaten und deren Mischungen,
- wenigstens eines Verdickungsmittels,
- wenigstens eines anionischen Tensids, das ausgewählt ist aus der Gruppe bestehend aus C₈-C₁₈-Alkylsulfaten, C₈-C₁₈-Alkylethersulfaten, C₈-C₁₈-Alkylarylsulfonsäuren, C₈-C₁₈-Fettsäuren und deren Mischung, und
- wenigstens eines nicht-ionischen Tensids, das ausgewählt ist aus der Gruppe bestehend aus Alkylpolyglucosiden,
b) Mischen und Erhalten einer Zusammensetzung,
c) In Kontakt bringen der Mischung von Schritt b) mit einer Zusammensetzung umfassend ein Treibmittel,
d) Expandieren durch in situ-Erzeugung von Gas unter Verwendung des Treibmittels und
e) Härten,
**dadurch gekennzeichnet, dass** die Menge an Verdickungsmittel bezogen auf die Gesamtmasse der in Schritt b) erhaltenen Zusammensetzung zwischen 0,05 und 0,4 % beträgt, die Menge an anionischem Tensid bezogen auf die Gesamtmasse der in Schritt b) erhaltenen Zusammensetzung zwischen 0,002 und 0,02 % beträgt, die Menge an nichtionischem Tensid, das ausgewählt ist aus der Gruppe bestehend aus Alkylpolyglucosiden, bezogen auf die Gesamtmasse der in Schritt b) erhaltenen Zusammensetzung zwischen 0,01 und 0,02 % beträgt, das Treibmittel ausgewählt ist aus der Gruppe bestehend aus Aluminiumpulver, ausgenommen Aluminiumnitrid und Aluminiumoxid, und Wasserstoffperoxid.

10. Verfahren nach dem vorangehenden Anspruch, **dadurch gekennzeichnet, dass** es außerdem einen Schritt f) Trocknen umfasst.

11. Verfahren nach dem vorangehenden Anspruch, **dadurch gekennzeichnet, dass** das Härten gemäß Schritt e) im Anschluss an das Expandieren gemäß Schritt d) erfolgt.

12. Verfahren nach dem vorangehenden Anspruch, **dadurch gekennzeichnet, dass** die Dauer des Expansionsschrittes zwischen einer und zehn Minuten, bevorzugterweise zwischen einer und fünf Minuten beträgt, und dass die Dauer des Härtens gemäß Schritt d) zwischen vier und zehn Minuten, bevorzugterweise fünf und acht Minuten beträgt.

## Claims

1. An incombustible mineral foam comprising:
- from 45 to 90% by mass of inorganic pozzolanic binder comprising polymerized metakaolin,
- from 0.08 to 2% by mass of thickener,
- from 0.003 to 0.07% by mass of at least one anionic surfactant chosen from the group consisting of C₈-C₁₈-alkyl sulfates, C₈-C₁₈-alkyl ether sulfates, C₈-C₁₈-alkyl aryl sulfonic acids, C₈-C₁₈-fatty acids and their mixtures,
- from 0.002 to 0.03% by mass of at least one nonionic surfactant chosen from the group consisting of alkylpolyglucosides,
- a gas phase.

2. The foam according to the preceding claim, **characterized in that** the thickener is chosen from the group consisting of starches soluble in water such as pregelatinized starch and galactomannans such as guar gum, xanthan gum, clays such as bentonite or montmorillonite or cellulose derivatives such as methyl ethyl cellulose.

3. The foam according to any one of the preceding claims, **characterized in that** the at least one nonionic surfactant is an alkylpolyglucoside or a mixture of alkylpolyglucosides of formula H-(C₆H₁₀O₅)ₘ-O-R¹, in which (C₆H₁₀O₅) is a glucose unit and R¹ is a C₆-C₂₂ alkyl group, preferably C₈-C₁₆ or C₈-C₁₀, and m is a positive integer between 1 and 10, 1 ≤ m ≤ 10.

4. The foam according to any one of the preceding claims, **characterized in that** the at least one anionic surfactant is a mixture of C₈-C₁₈-alkyl aryl sulfonate, C₈-C₁₈-alkyl ether sulfate and C₈-C₁₈-fatty acid.

5. Support comprising a foam according to any one of claims 1 to 4.

6. Composition for the preparation of an incombustible mineral foam according to any one of claims 1 to 4:
- from 20 to 60% by mass of at least one pozzolanic inorganic binder comprising metakaolin,
- from 0.05 to 1.3% by mass of thickener,
- from 0.002 to 0.04% of at least one anionic surfactant chosen from the group consisting of C₈-C₁₈-alkyl sulfates, C₈-C₁₈-alkyl ether sulphates, C₈-C₁₈-alkyl aryl sulfonic acids, C₈-C₁₈ fatty acids and their mixtures,
- from 0.001 to 0.02% of at least one nonionic surfactant chosen from the group consisting of alkylpolyglucosides,
- at least one alkaline activator chosen from the group of hydroxides of alkaline metals and silicates of alkaline metals and their mixtures,
- water QS.

7. Use of a composition according to the preceding claim for the preparation of an incombustible mineral foam.

8. Kit including:
(1) a composition according to any one of claims 1 to 4,
(2) a composition comprising a blowing agent.

9. Method for the preparation of an incombustible mineral foam according to any one of claims 1 to 4 comprising the steps of:
a) contacting, in aqueous solution,
∘ at least one pozzolanic inorganic binder comprising metakaolin,
∘ at least one alkaline activator chosen from the group of hydroxides of alkaline metals and silicates of alkaline metals and their mixtures,
∘ at least one thickener,
∘ at least one anionic surfactant chosen from the group consisting of C₈-C₁₈ alkyl sulphates, C₈-C₁₈ -alkyl ether sulphates, C₈-C₁₈ -alkyl aryl sulfonic acids and C₈-C₁₈ fatty acids, and
∘ at least one nonionic surfactant chosen from the group consisting of alkylpolyglucosides,
b) mixing and obtaining a composition,
c) contacting the composition of step b) with a composition comprising a blowing agent,
d) expanding by generating gas in situ by means of the blowing agent, and
e) hardening,
**characterized in that** the amount of thickener relative to the total mass of the composition obtained in step b) is between 0.05 and 0.4%, the amount of anionic surfactant relative to the total mass of the composition obtained in step b) is between 0.002 and 0.02%, the amount of nonionic surfactant chosen from the group consisting of alkylpolyglucosides relative to the total mass of the composition obtained in step b) is between 0.001 and 0.02%, the blowing agent is chosen from the group consisting of aluminum powder, free from aluminum nitride and aluminum oxide, and hydrogen peroxide.

10. The method according to the preceding claim, **characterized in that** it further comprises a drying step f).

11. The method according to the preceding claim, **characterized in that** the hardening of step e) follows the expansion of step d).

12. The method according to the preceding claim, **characterized in that** the duration of the expansion step is between 1 and 10 minutes, preferably between 1 and 5 minutes and **in that** the duration of the hardening step d) is between 4 and 10 minutes, preferably 5 and 8 minutes.
